# EUROPÄISCHE PATENTANMELDUNG

(11) **EP 2 501 204 A2**
(43) Veröffentlichungstag der Anmeldung: **19.09.2012**
(21) Anmeldenummer: 11189510.8
(22) Anmeldetag: 17.11.2011
(51) Int. Cl.: H05B 33/08, H05B 37/02

(54) **Verfahren zum Ansteuern einer Lampeneinheit eines Niedervoltbeleuchtungssystems**

(30) Priorität: 17.03.2011 DE 102011001363
(71) Anmelder: Insta Elektro GmbH, 58509 Lüdenscheid (DE)
(72) Erfinder: Holtz, Friedhelm, 58511 Lüdenscheid (DE); Mundinger, Harald, 58849 Herscheid (DE)

(57) **Zusammenfassung**

Ein Verfahren zum Ansteuern einer zumindest ein aktives Leuchtmittel 11, 11.1, 11.2 umfassenden Lampeneinheit 8, 8.1 eines netzspannungsgespeisten Niedervoltbeleuchtungssystems 1 verfügt über ein zum Betreiben des Beleuchtungssystems 1 die das Beleuchtungssystem 1 speisende Netzspannung in Niederspannung umwandelndes Schaltnetzteil 2. Die Niederspannung wird zum Übertragen von Steuerinformationen in digitaler Form moduliert. Auf Seiten der zumindest einen Lampeneinheit 8, 8.1 wird die modulierte Niederspannung decodiert und das zumindest eine aktive Leuchtmittel 11, 11.1, 11.2 der Lampeneinheit 8, 8.1 entsprechend der empfangenen Steuerinformation bezüglich ihres Betriebes angesteuert.

Ein Steuergerät zum Ansteuern einer zumindest ein aktives Leuchtmittel 11, 11.1, 11.2 umfassenden Lampeneinheit 8, 8.1 eines Niedervoltbeleuchtungssystems 1 verfügt zum Umwandeln von dieses beaufschlagender Netzspannung auf die Niederspannung ein Schaltnetzteil 2. Dem Schaltnetzteil 2 ist ausgangsseitig ein Modulator 5 zum Modulieren der Niederspannung zum Übertragen einer Steuerinformation in digitaler Form an die wenigstens eine Lampeneinheit 8, 8.1 des Beleuchtungssystems 1 nachgeschaltet. Der Modulator 5 ist durch das Signal eines Steuerinformationseingabegerätes 7 beaufschlagt.

Eine Lampeneinheit 8, 8.1, geeignet, um durch ein solches Steuergerät angesteuert zu werden, verfügt über einen Decoder 9 zum Decodieren von über das Niedervoltgleichstromnetz empfangener digitaler Steuerinformation. Ferner ist einer solchen Lampeneinheit 8, 8.1 ein von dem Decoder 9 mit einem Steuersignal beaufschlagter Lampentreiber 10 zum Ansteuern des wenigstens einen aktiven Leuchtmittels 11, 11.1, 11.2 zugeordnet.

## Beschreibung

Die Erfindung betrifft ein Verfahren zum Ansteuern einer zumindest ein aktives Leuchtmittel umfassenden Lampeneinheit eines netzspannungsgespeisten Niedervoltbeleuchtungssystems. Ferner betrifft die Erfindung ein Steuergerät zum Ansteuern einer zumindest ein aktives Leuchtmittel umfassendes Lampeneinheit eines Niedervoltbeleuchtungssystems. Darüber hinaus ist eine Lampeneinheit für ein solches Beleuchtungssystem beschrieben, ebenso wie ein Niedervoltbeleuchtungssystem mit einem solchen Steuergerät.

Niedervoltbeleuchtungssysteme werden vielfach eingesetzt, herkömmlich zumeist zum Betreiben von Halogenlampen. Derartige Niederspannungssysteme werden typischerweise mit einer Kleinspannung von 12 V betrieben. In zunehmendem Maße wird gewünscht, derartige passive, Ohm'-sche Verbraucher darstellende Lampen durch aktive Leuchtmittel, beispielsweise LEDs zu ersetzen. Zum Bereitstellen der benötigten Niedervoltgleichspannung zum Betreiben eines solchen Niedervoltbeleuchtungssystems mit LEDs als Leuchmitteln dient typischerweise ein Transformator, durch den zunächst eine modulierte Niederspannung bereitgestellt wird, die anschließend gleichgerichtet wird. Eingesetzt werden Brücken-gleichrichter. Zwar sind bei einem solchen Beleuchtungssystem über eine Phasenanschnitts- oder Phasenabschnittssteuerung die aktiven Leuchtmittel dimmbar und somit hinsichtlich ihrer Leuchtstärke ansteuerbar. Das diesbezügliche Ergebnis ist jedoch nicht zufriedenstellend. Derzeitig existieren jedoch keine Systeme, bei denen, ohne zusätzliche Kommunikationswege bereitzustellen, die Lampeneinheiten zum Erzielen eines bestimmten reproduzierbaren Beleuchtungseffektes angesteuert werden können. Wünschenswert wäre es beispielsweise, dass eine Lampeneinheit als RGB-LED-Lampe ausgeführt ist, um auf diese Weise auch unterschiedliche Lichtfarben bereitstellen zu können.

Ausgehend von diesem diskutierten Stand der Technik liegt der Erfindung daher die Aufgabe zugrunde, ein eingangs genanntes Verfahren dergestalt weiterzubilden, dass mit diesem nicht nur aktive Leuchtmittel mit einer geringeren Verlustleistung betrieben werden können, sondern dass mit diesem an dem Beleuchtungssystem beteiligte Lampeneinheiten auch hinsichtlich eines gewünschten Beleuchtungsambientes angesteuert werden können.

Des Weiteren liegt der Erfindung die Aufgabe zugrunde, ein Steuergerät sowie eine Lampeneinheit vorzuschlagen, mit denen sich dieses Verfahren realisieren lässt.

Gelöst wird die verfahrensbezogene Aufgabe durch ein eingangs genanntes, gattungsgemäßes Verfahren, bei dem
- zum Betreiben des Beleuchtungssystems die das Beleuchtungssystem speisende Netzspannung unter Verwendung eines Schaltnetzteils in die Niederspannung des Niedervoltbeleuchtungssystems umgewandelt wird,
- welche Niederspannung zum Übertragen von Steuerinformationen in digitaler Form an die Lampeneinheit moduliert wird,
- welche modulierte Niederspannung in jeder auf diese Weise ansteuerbaren Lampeneinheit decodiert wird, und
- das wenigstens eine aktive Leuchtmittel der zumindest einen, auf diese Weise ansteuerbaren Lampeneinheit des Beleuchtungssystems entsprechend der empfangenen Steuerinformation bezüglich ihres Betriebes angesteuert wird.

Das erfindungsgemäße Steuergerät zeichnet sich dadurch aus, dass das Steuergerät ein Schaltnetzteil zum Umwandeln von dieses beaufschlagender Netzspannung auf eine Niederspannung umfasst und dass dem Steuergerät ein Modulator zum Modulieren der Niederspannung zum Übertragen einer Steuerinformation in digitaler Form an die wenigstens eine Lampeneinheit des Beleuchtungssystems sowie ein den Modulator beaufschlagendes Steuerinformationseingabegerät zugeordnet sind.

Die beanspruchte Lampeneinheit umfasst einen Decoder zum Decodieren von über das Niedervoltgleichstromnetz empfangender digitaler Steuerinformation und einen von dem Decoder mit einem Steuersignal beaufschlagten Lampentreiber zum Ansteuern des wenigstens einen Leuchtmittels aufweist.

Bei dem beanspruchten Verfahren ― dieses gilt, soweit beteiligt, auch für das Steuergerät bzw. die Lampeneinheit ― ist vorgesehen, dass die zum Betreiben des Beleuchtungssystems bereitgestellte Netzwechselspannung mittels eines Schaltnetzteils auf die gewünschte Niederspannung als Gleichspannung umgewandelt wird. Beispielsweise kann die Niederspannung 12 V betragen. Bei der Verwendung eines Schaltnetzteils kann, wenn gewünscht, im Wesentlichen die gesamte, netzseitig bereitgestellte Leistung zum Betreiben des bzw. der Leuchtmittel genutzt werden.

Für die Zwecke des Übertragens von Steuerinformation an eine oder mehrere Lampeneinheiten des Niedervoltbeleuchtungssystems wird der durch das Schaltnetzteil bereitgestellte Gleichstrom in Niederspannung (beispielsweise 12 V) zum Übertragen der Steuerinformation in digitaler Form an die zumindest eine Lampeneinheit moduliert. Dieses erfolgt gemäß einer Ausgestaltung der Erfindung mittels eines Verfahrens, bei dem zum Übertragen von Steuerinformation an die wenigstens eine Lampeneinheit die Niederspannung hinsichtlich ihrer Polarität moduliert wird. Dies bedeutet, dass eine Codierung durch eine Wechselfolge von positiven und negativen Spannungspulsen erfolgt. Von besonderem Vorteil eines solchen Verfahrens ist auch die Rechteckform der einzelnen Pulse. Nach einem Gleichrichten derselben kann somit den Leuchtmitteln ein sauberer Gleichstrom zur Verfügung gestellt werden. Eine solche Modulation kann in Form eines an sich bekannten Manchester-Codes erfolgen. Bevorzugt ist jedoch eine Modulation, bei der die beiden Binärzustände sich durch eine unterschiedliche Pulsdauer unterscheiden. Dann zeigt der Polaritätswechsel den Beginn eines neuen Bit an. Erst durch die Länge dieses Pulses wird der Zustand "1 " oder "0" definiert. Vom Vorteil gegenüber einem Manchester-Code ist, dass statistisch gesehen eine geringere Anzahl an Polaritätswechsel je Symbol notwendig ist, mithin die Störausstrahlung geringer ist. Dabei kann vorgesehen sein, dass die Pulsdauer des einen Zustandes (beispielsweise "1") das Zwei- oder Dreifache des anderen Zustandes (beispielsweise "0") beträgt. In jedem Fall erfolgt die Codierung unabhängig von dem gewählten Prinzip in digitaler Form und somit in Form des Symbols "0" und "1 ".

Gemäß einer weiteren Ausgestaltung der Erfindung wird die Niederspannung zum Übertragen von Steuerinformationen an die zumindest eine Lampeneinheit durch eine Modulationsspannung, die auf die Niederspannung aufgeprägt wird, erzeugt. Erreicht werden kann dieses durch eine beispielsweise eine mittels eines MOSFET überbrückten Diodenstrecke, die nur bei aktiver Modulationsspannung geöffnet ist. Auf diese Weise lässt sich eine Modulationsspannung erzeugen, die so gering ist, dass nutzerseitig die kurzzeitige Spannungsänderung durch eine Helligkeitsänderung der angesteuerten Lampeneinheit nicht merkbar ist. Eine Modulationsspannung von etwa 0,7 V wird als ausreichend angesehen. Als Codierung eignet sich für dieses Informationsübermittlungsverfahren die Manchester-Modulation, und zwar in einer Ausgestaltung, bei der ein Informationstelegramm burstweise höherfrequent ausgesendet wird. Dies hat zum Vorteil, dass insofern die meiste Zeit die zumindest eine Lampeneinheit unmodulierte Spannung erhält.

Die vorgeschriebenen Verfahrensausgestaltung erlaubt eine Modulation der Niederspannung, bei der die zu übertragende Information als Pulsweitenmodulation ausgeführt ist. Dabei ist vorzugsweise vorgesehen, dass die Pulse mit der Nenn-Niederspannung ― also diejenigen, die nicht um die Modulationsspannung erniedrigt sind ― hinsichtlich ihrer Dauer kodiert und somit informationstragend sind. Getrennt werden diese Pulse durch zeitlich kurz gehaltene, durch die Modulationsspannung abgesenkte Pulse. Diese weisen typischerweise eine konstante Dauer auf. Damit erhalten die an das Niederspannungsnetz angeschlossenen Lampeneinheiten die Nenn-Niederspannung, die bei einer Informationsübermittlung nur kurzzeitig und daher für einen Nutzer nicht erkennbar zum Trennen der einzelnen Bits um die Modulationsspannung abgesenkt wird.

Die mit der notwendigen Steuerinformation modulierte Niederspannung wird in jeder durch die Steuerinformation ansteuerbaren Lampeneinheit des Niedervoltbeleuchtungssystems decodiert. In Abhängigkeit von der erhaltenen Steuerinformation wird sodann das zumindest eine aktive Leuchtmittel, beispielsweise eine oder mehrere LEDs, mittels eines Lampentreibers angesteuert. Eine Ansteuerung kann beispielsweise pulsweitenmoduliert erfolgen. Vorzugsweise verfügt jede Lampeneinheit über drei LEDs, so dass eine solche Lampeneinheit als RGB-Lampeneinheit konzipiert ist. Entsprechend der erhaltenen Steuerinformation werden dann die einzelnen LEDs zum Erzeugen der gewünschten Lichtfarbe und der gewünschten Helligkeit angesteuert.

Von besonderem Vorteil dieses Verfahrens ist, dass herkömmliche Zwei-Draht-Installationen genutzt werden können. Es ist allein erforderlich, das ansonsten verwendete Vorschaltgerät in Form eines gewickelten oder elektronischen Trafos durch ein zum Durchführen des vorgeschriebenen Verfahrens geeignetes Steuergerät zu ersetzen und anstelle der herkömmlichen Halogenlampen Lampeneinheiten, wie vorstehend beschrieben, anzuschließen.

Ein Steuergerät zum Zwecke des Durchführens des vorstehenden Verfahrens verfügt über ein Schaltnetzteil zum Umwandeln von dieses beaufschlagender Netzspannung auf die Niederspannung. Des Weiteren verfügt das Steuergerät über einen Modulator zum Modulieren der Niederspannung für die Zwecke des Übertragens von Steuerinformation in digitaler Form an die in dieser Form ansteuerbaren Lampeneinheiten des Niedervoltbeleuchtungssystems. Notwendig ist zudem ein den Modulator beaufschlagendes Steuerinformationseingabegerät. Durch dieses erhält der Modulator die zu modulierende Steuerinformation. Bei einem solchen Steuerinformationseingabegerät kann es sich beispielsweise um eine Eingabeeinheit handeln, an der durch einen Benutzer, typischerweise manuell, der gewünschte Leuchtmittelbetrieb einstellbar ist. Eine solche Eingabeeinheit kann drahtgebunden oder auch über eine drahtlose Kommunikationsstrecke an den Modulator angeschlossen sein. Gemäß einer anderen Ausgestaltung dient als Steuerinformationseingabegerät ein Decoder zum Decodieren von über die am Schaltnetzteil anliegende Netzspannung durch Modulation derselben übermittelten Steuerinformation, die sodann die zu modulierende Steuerinformation darstellt. Bei dieser Ausgestaltung ist in die Netzspannungszufuhr eine Eingabeeinheit eingeschaltet, in die die gewünschte Steuerinformation eingegeben wird, welche sodann auf die Netzspannung aufmoduliert wird. Bei diesem Konzept wird eine zusätzliche Verdrahtung oder eine drahtlose Kommunikation zwischen der Eingabeeinheit und dem Modulator grundsätzlich nicht benötigt.

Gemäß einer Weiterbildung dieses Steuergerätes ist vorgesehen, an einer dem Modulator vorgeschalteten Stelle einen Niederspannungsgleichstromabgriff einzurichten. Es versteht sich, dass selbstverständlich auch mehrere derartiger Gleichstromabgriffe vorgesehen sein können. An diesen Niedervoltgleichstromabgriff können unterschiedliche gebäudetechnische, mit Niedervoltgleichspannung betriebene Einrichtungen, wie beispielsweise Sensoren oder dergleichen, angeschlossen werden. Dabei versteht es sich, dass diese zusätzlichen Einrichtungen sodann keine eigene Stromversorgung mehr benötigen, sondern an diejenige des Niedervoltbeleuchtungssystems angeschlossen werden können. Ausgenutzt wird hierbei der Umstand, dass grundsätzlich am Ausgang des Schaltnetzteils die Niederspannung anliegt, auch wenn die Lampeneinheiten nicht betrieben werden.

Eine Lampeneinheit, ansteuerbar durch ein Steuergerät wie vorbeschrieben, umfasst einen Decoder zum Decodieren von über das Niedervoltgleichstromnetz empfangener digitaler Steuerinformation. Angeschlossen an den Decoder ist ein Lampentreiber zum Ansteuern des wenigstens einen Leuchtmittels. Der Lampentreiber kann mehrkanalig ausgebildet sein. Im Falle einer RGB-Lampeneinheit ist der Lampentreiber drei-kanalig konzipiert, damit jede LED der LED-Zusammenstellung unabhängig von den anderen angesteuert werden kann. Bei der Durchführung des vorbeschriebenen Informationsübermittlungsverfahrens unter Verwendung einer Modulation, die polaritätswechselnd arbeitet, ist dem Lampentreiber vorgeschaltet und dem lampeneinheitseitigen Decoder nachgeschaltet ein Gleichrichter, ausgeführt etwa als Brückengleichrichter, vorgesehen. Bei Verwendung einer Modulationsspannung zum Erzeugen der auf die Versorgungsspannung aufgeprägten digitalen Information kann als Decoder beispielsweise ein Shunt-Widerstand dienen. Bei dieser Ausgestaltung ist ein Gleichrichter nicht erforderlich. Über den Shunt wird der Spannungsabfall gemessen, daraus das Informations-Telegramm wiedergewonnen und anschließend decodiert.

Weitere Vorteile und Ausgestaltungen der Erfindung ergeben sich aus der nachfolgenden Beschreibung von Ausführungsbeispielen unter Bezugnahme auf die beigefügten Figuren. Es zeigen:
- **Fig. 1:**: In einer Prinzipdarstellung nach Art eines Blockschaltbildes ein Niedervoltbeleuchtungssystem gemäß einem ersten Ausführungsbeispiel,
- **Fig. 2:**: Eine Darstellung einer Pulsfolge einer modulierten Gleichspannung,
- **Fig. 3:**: In einer Prinzipdarstellung nach Art eines Blockschaltbildes ein Niedervoltbeleuchtungssystem gemäß einem weiteren Ausführungsbeispiel,
- **Fig. 4:**: In einer Prinzipdarstellung nach Art eines Blockschaltbildes ein Niedervoltbeleuchtungssystem gemäß noch einem weiteren Ausführungsbeispiel und
- **Fig. 5:**: In einer Prinzipdarstellung nach Art eines Blockschaltbildes ein Niedervoltbeleuchtungssystem gemäß demjenigen der Figur 4 arbeitend mit einem anderen Modulationsalgorithmus.

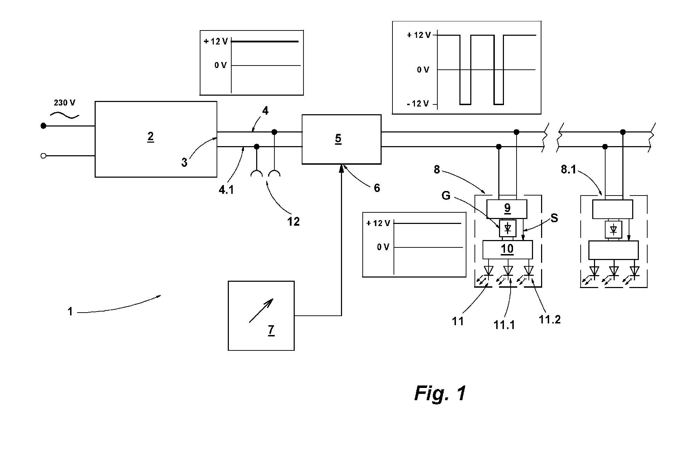

Ein Niedervoltbeleuchtungssystem 1 verfügt über ein Schaltnetzteil 2, welches netzspannungsgespeist ist. Daher liegt an dem Eingang des Schaltnetzteils Netzspannung (230 V) an. Am Ausgang 3 des Schaltnetzteils 2 liegt die durch das Schaltnetzteil 2 umgewandelte Niederspannung als Gleichspannung an. Der Niederspannungsteil des Niedervoltbeleuchtungssystems 1 ist in Zwei-Draht-Technologie ausgeführt. Die beiden Leiter sind mit den Bezugszeichen 4, 4.1 in der Figur 1 gekennzeichnet. Dem Schaltnetzteil 2 nachgeschaltet und in die Leiter 4, 4.1 eingeschaltet ist ein Modulator 5. Der Modulator 5 dient zum Zwecke des Modulierens der Niederspannung zum Übertragen von Steuerinformation an diesbezüglich ansteuerbare Lampeneinheiten als weitere Teile des Niedervoltbeleuchtungssystems 1. Der Modulator 5 verfügt über einen Eingang 6, an den eine Eingabeeinheit 7, bei dem dargestellten Ausführungsbeispiel drahtgebunden, angeschlossen ist. Mittels der Eingabeeinheit 7 kann manuell die gewünschte Beleuchtungscharakteristik eingestellt werden. Die Eingabeeinheit 7 bildet bei diesem Ausführungsbeispiel das Steuerinformationseingabegerät.

Das Beleuchtungssystem 1 verfügt über mehrere Lampeneinheiten 8, 8.1, von denen der Einfachheit halber in der Figur beispielhaft zwei Lampeneinheiten ― die Lampeneinheiten 8, 8.1 ― dargestellt sind. Die Lampeneinheiten 8, 8.1 und die weiteren, in der Figur nicht dargestellten Lampeneinheiten sind an die beiden Leiter 4, 4.1 dem Modulator 5 nachgeschaltet angeschlossen.

Die Lampeneinheiten 8, 8.1 sind identisch. Im Folgenden ist die Lampeneinheit 8 beschrieben. Die Lampeneinheit 8 ist eingangsseitig an die beiden Leiter 4, 4.1 angeschlossen. Die Lampeneinheit 8 verfügt über einen Decoder 9, der die über das Gleichspannungsnetz empfangene Steuerinformation ausliest, um mittels eines Steuersignals über eine Steuerleitung S einen Lampentreiber 10 anzusteuern. Der Lampentreiber 10 der Lampeneinheit 8 ist 3-kanalig ausgebildet und steuert drei LEDs 11, 11.1, 11.2 an. Die LEDs 11, 11.1, 11.2 unterscheiden sich hinsichtlich ihrer Lichtfarbe. Die LED 11 emittiert rotes Licht, die LED 11.1 grünes Licht und die LED 11.2 blaues Licht. Mithin handelt es sich bei dieser LED-Zusammenstellung um eine RGB-Lampe. Jeder der LEDs 11, 11.1, 11.2 kann von dem Lampentreiber 10 unabhängig von den anderen LEDs angesteuert werden. Eine Ansteuerung der LEDs 11, 11.1, 11.2 erfolgt bei dem dargestellten Ausführungsbeispiel pulsweitenmoduliert. Eine Ansteuerung kann auch auf andere Weise erfolgen, beispielsweise mittels eines Verfahrens, wie dieses in DE 10 2005 011 503 B3 beschrieben ist. Durch diese explizite Bezugnahme auf DE 10 2005 011 503 B3 wird die Offenbahrung dieses Dokumentes zum Gegenstand der Offenbahrung dieser Ausführungen gemacht.

Das Niedervoltbeleuchtungssystem 1 verfügt des Weiteren über einen Gleichstromabgriff 12. Dieser ist dem Schaltnetzteil 2 nachgeschaltet und dem Modulator 5 vorgeschaltet. Aufgrund der Konzeption des Niedervoltbeleuchtungssystems 1, liegt an dem Gleichstromabgriff 12 Spannung an, unabhängig davon, ob eine oder mehrere der Lampeneinheiten 8, 8.1 tatsächlich in Betrieb sind. Der Gleichstromabgriff 12 dient zum bedarfsweisen Anschließen von zusätzlichen Elementen des Beleuchtungssystems 1, wie beispielsweise einen Helligkeitssensor oder von einen oder mehreren anderen Sensoren, wie diese etwa im Rahmen eines Gebäudeinstallationssystems benötigt werden. Infolge der Möglichkeit des Gleichstromabgriffes 12 benötigen dieser eine oder diese mehreren weiteren niedervoltgespeisten Sensoren keine unabhängigen Spannungsversorgungen und damit auch keine Batterien, Akkus und/oder Installationsverkabelungen. Bei Sensoren für ein Gebäudeinstallationssystem kann es sich beispielsweise um Rauchmelder, um CO₂-Melder, Präsenzmelder oder dergleichen handeln.

Die in dem Niedervoltbeleuchtungssystem 1 vorhandene Gleichspannung, insbesondere am Gleichstromabgriff 12 kann auch zum Betrieb einer drahtlosen Kommunikation, beispielsweise über eine Funkstrecke zwischen gebäudetechnischen Einrichtungen genutzt werden. Beispielsweise können auf diese Weise an den Gleichstromabgriff 12 angeschlossene Rauchmelder miteinander funkvernetzt sein, um auf diese Weise eine Alarmschaltung auch an eine zentrale Überwachungsstelle zu ermöglichen. Durch die Anbindung derartiger Sensoren an das Beleuchtungssystem 1 besteht die Möglichkeit, das Beleuchtungssystem selbst bzw. die daran beteiligten Lampeneinheiten 8, 8.1 als Signalgeber zu nutzen. In einem Brandfall kann beispielsweise eine optische Signalisierung durch mehrere kurze Beleuchtungsunterbrechungen bei eingeschalteter Beleuchtung oder durch kurze Lichtblitze bei ausgeschalteter Beleuchtung signalisiert werden.

Eine drahtlose Kommunikationsstrecke kann ebenfalls für die Zwecke einer Fernbedienung des Beleuchtungssystems 1 genutzt werden.

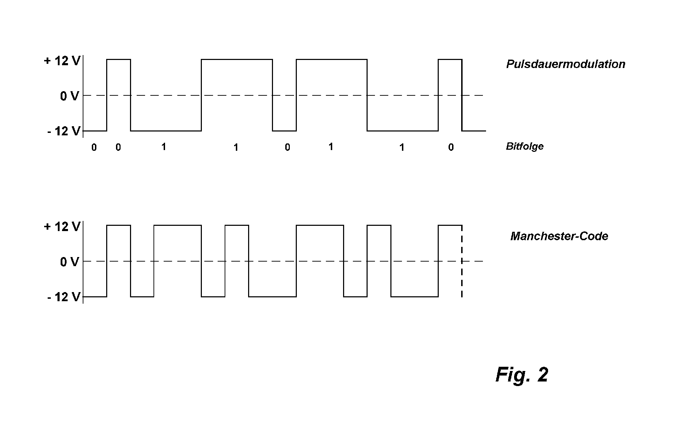

Zum Übertragen von Steuerinformation an die Lampeneinheit 8, 8.1 wird die am Ausgang 3 des Schaltnetzteils 2 anliegende Gleichspannung, die im vorliegenden Fall 12V beträgt, hinsichtlich ihrer Polarität sowie der Pulsdauer moduliert. Dieses erfolgt, wie vorbeschrieben, mittels des Modulators 5. Schematisiert ist im Bereich des Gleichstromabgriffes 12 die verfügbare Spannung in einem Diagramm dargestellt. Über die Eingabeeinheit 7 wird die gewünschte Beleuchtungscharakteristik, die durch das Beleuchtungssystem 1 generiert werden soll, eingestellt. Diese steuert mit einem Signal den Modulator 5 an, der die Spannung bezüglich ihrer Polarität entsprechend moduliert. Bei dem dargestellten Ausführungsbeispiel erfolgt eine Codierung der beiden Binärzustände "1 " und "0" durch eine unterschiedliche Pulsdauer. Die Länge der Pulsdauer der "1 " ist bei dem dargestellten Ausführungsbeispiel etwa dreimal so lang wie die Länge einer "0". Gemäß diesem Verfahren werden aufeinander folgende Bits durch einen Polaritätswechsel voneinander getrennt. Entsprechend erfolgt beim Dekodieren einer solchermaßen modulierten Gleichspannung eine Auswertung der Flanken. Die beiden Zustände "1 " und "0" unterscheiden sich, wie vorstehend beschrieben, hinsichtlich ihrer Pulsdauer. Am Ausgang des Modulators 5 ist schematisiert eine solche hinsichtlich ihrer Polarität modulierte Spannung des durch das Schaltnetzteil 2 bereitgestellten Gleichstroms abgebildet. Figur 2 zeigt beispielhaft die nach diesem Prinzip modulierte Gleichspannung mit einer Bitfolge 00110110. Dieser vorbeschriebenen Codierung gegenübergestellt ist dieselbe Codierung, ausgeführt als Manchester-Code. Deutlich wird aus dieser Gegenüberstellung, dass bei dem Pulsdauermodulationsverfahren die Zahl der Polaritätswechsel deutlich reduziert ist.

Der an die Leiter 4, 4.1 angeschlossene Decoder 9 der Lampeneinheit 8 ― gleiches gilt für sämtliche parallel geschalteten, durch eine solche Modulation ansteuerbare Lampeneinheiten 8.1 ― decodiert die Steuerinformation und gibt ein entsprechendes Steuersignal über die Steuerleitung S an den Lampentreiber 10 ab. Eine Gleichrichtung erfolgt innerhalb der Lampeneinheit 8 durch eine Brücken-Gleichrichtung G, so dass die LEDs 11, 11.1, 11.2 einen sauberen 12 V-Gleichstrom erhalten (siehe Diagramm neben Lampeneinheit 8), ohne dass eine aufwendige Siebung notwendig wäre. Bei Einsatz eines Decoders, wie vorbeschrieben, können die an die Leiter 4, 4.1 angeschlossenen Lampeneinheiten 8, 8.1 hinsichtlich ihrer Polarität beliebig angeschlossen werden. Aus diesem Grunde eignet sich ein solches Niedervoltbeleuchtungssystem vor allem auch zur Umnutzung bestehender Niedervolt-Seil- und -Stangensysteme.

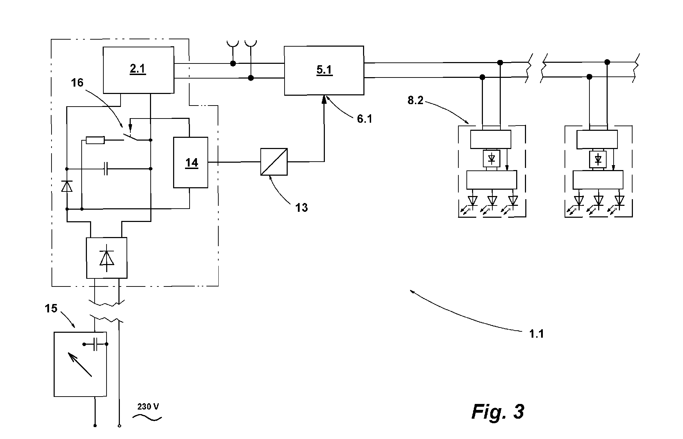

Figur 3 zeigt ein weiteres Niedervoltbeleuchtungssystem 1.1, welches prinzipiell gleich aufgebaut ist wie das Niedervoltbeleuchtungssystem 1 der Figur 1. Das Niedervoltbeleuchtungssystem 1.1 unterscheidet sich von dem zu Figur 1 beschriebenen dadurch, dass der Eingang 6.1 des Modulators 5.1 unter Zwischenschaltung eines Optokopplers 13 an den Ausgang eines Decoders 14 als Steuerinformationseingabegerät angeschlossen ist. Es versteht sich, dass anstelle eines Optokopplers, wie bei dem beschriebenen Ausführungsbeispiel eingesetzt, jedwede andere potenzialgetrennte Signalübertragungsschaltung verwendet werden kann. Der Decoder 14 ist angeschlossen, um über ein in die Netzspannungsversorgung eingeschaltetes Eingabegerät 15 auf die Netzspannung mittels des Eingabegerätes 15 und einem diesem zugehörigen Modulator aufmodulierte Steuerinformation zu decodieren. Bei dieser Ausgestaltung braucht eine zusätzliche Kommunikationsstrecke zwischen einer Eingabeeinheit ― hier der Eingabeeinheit 15 ― und dem Modulator 5.1 nicht zusätzlich vorgesehen zu werden. Vielmehr wird hierfür die ohnehin vorhandene Netzleitung benutzt. Bei dem in Figur 2 gezeigten Niedervoltbeleuchtungssystem 1.1 wird Steuerinformation auf einen Teil einer Halbwelle in einer Modulationsphase aufgeprägt, während empfängerseitig und somit auf Seiten des Decoders 14, ein schaltbarer Nebenschluss 16 geschlossen ist. Der Nebenschluss wird erzeugt, um in den Netzleitungen definierte Potential-Verhältnisse zu haben, damit die Netzspannungs-Modulation nicht durch parasitäre Effekte, wie beispielsweise kapazitive oder induktive Leistungsbeläge oder ein Übersprechen zwischen nebeneinander verlegten Leitungen, die Modulation bzw. die Übertragung der Steuerinformation stören können. Schaltbar ist der Nebenschluss 16, damit Verluste vermieden werden, wenn der Nebenschluss nicht benötigt wird. Weiterhin kann durch die Beeinflussung des Schaltzeitpunktes des Nebenschlusses 16 eine einfache Statusinformation an die Eingabeeinheit 15 übertragen werden.

Es versteht sich, dass an die Niedervoltleiter 4, 4.1 der Niedervoltbeleuchtungssysteme 1, 1.1 dem jeweiligen Modulator 5, 5.1 nachgeschaltet neben solchen Lampeneinheiten 8, 8.1 oder 8.2, die durch die vorbeschriebene Steuerinformation ansteuerbar sind, auch herkömmliche, typischerweise als Ohm'sche Verbraucher ausgelegte Leuchtmittel, beispielsweise Halogenlampen, angeschlossen werden können. Diese sind von der Modulation unbeeinflusst.

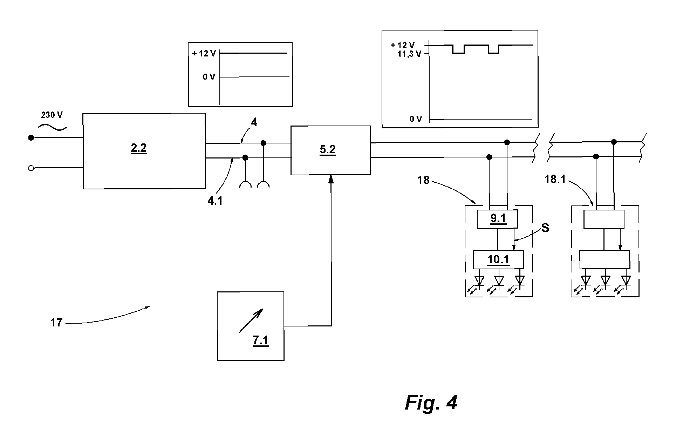

Figur 4 zeigt ein Niedervoltbeleuchtungssystem 17 gemäß einem weiteren Ausführungsbeispiel. Diejenigen Bestandteile, die bei dem Niedervoltbeleuchtungssystem 17 mit denjenigen der zuvor beschriebenen gleich sind, sind mit gleichen Bezugszeichen angegeben, geändert lediglich durch eine andere Nummerierung im Suffix. Das Niedervoltbeleuchtungssystem 17 unterscheidet sich von den vorbeschriebenen Niedervoltbeleuchtungssystemen 1, 1.1 durch eine unterschiedliche Ausgestaltung der Modulation zum Übermitteln von Steuerinformationen auf die Lampeneinheiten 18, 18.1. Bei dem Niedervoltbeleuchtungssystem 17 wird zur Modulation eine Modulationsspannung auf die vom Schaltnetzteil 2.2 bereitgestellte Gleichspannung aufgeprägt. Dieses erfolgt beispielsweise durch Vorsehen einer Diodenstrecke, die durch geeignete Mittel, beispielsweise einen MOSFET überbrückt wird und nur bei aktiver Modulationsspannung geöffnet ist. Bei dem dargestellten Ausführungsbeispiel wird eine Modulationsspannung von 0,7V verwendet, die die ansonsten auf den Leitern 4, 4.1 anliegende Spannung von 12 V erniedrigt. Oberhalb der Ausgangsleiter des Modulators 5.2 des Niedervoltbeleuchtungssystems 17 ist beispielhaft eine solche Modulation in einem nicht maßstabsgerechten Diagramm dargestellt. Durch die Modulation wird bei diesem Ausführungsbeispiel die Spannung geändert. Aus diesem Grunde ist vorgesehen, die Informationsübertragung und damit die Dauer einer Modulation möglichst kurz zu halten. Daher wird man bevorzugt eine Manchester-Modulation für die Datenübermittlung vorsehen und die Modulation burstweise durchführen. Dieses bedeutet, dass in kurzer Zeit die Steuerinformation auf die Gleichspannung aufgeprägt wird. Die Modulationsspannung soll möglichst gering sein, zumindest so gering, dass Änderungen in der Lichtstärke der an die Leiter 4, 4.1 angeschlossenen Lampeneinheiten bei ihrer Ansteuerung nicht merklich auffallen. Dennoch ist es gewünscht, die Modulationsphasen kurz zu halten, damit die angeschlossenen Lampeneinheiten 18, 18.1 weitestgehend unmodulierte Spannung erhalten. Die an das Beleuchtungssystem 17 angeschlossenen Lampeneinheiten 18, 18.1 umfassen als Decoder 9.1 eine Shunt-Widerstandsschaltung, mit der die Spannung am Eingang der Lampeneinheit 18, 18.1 abgegriffen wird. Die abgegriffene Spannung wird anschließend hinsichtlich des darin enthaltenen Telegramms ausgewertet, decodiert und anschließend wird entsprechend die Lampentreiber 10.1 angesteuert. Die Lampeneinheiten 18, 18.1 benötigen bei diesem Modulationsverfahren keinen Brücken-Gleichrichter wie die Lampeneinheiten 8, 8.1.

Bei dem zu Figur 4 beschriebenen Verfahren zum Betrieb des Niedervoltbeleuchtungssystem 17 müssen die Lampeneinheiten 18, 18.1 polaritätsrichtig an die Leiter angeschlossen werden. Soll ein Falschanschluss vermieden werden, wird den Lampeneinheiten 18, 18.1 eine Schutzdiode etwa in Flussrichtung zugeordnet, vorzugsweise jedoch in einer antiparallelen Anordnung.

Figur 4 zeigt beispielhaft eine Ausgestaltung des Niedervoltbeleuchtungssystems, bei dem die Steuerinformation analog zu der Ausgestaltung der Figur 1 dem Modulator zugeführt wird. Gleichermaßen lässt sich das zu Figur 4 beschriebene Verfahren und das hierzu beschriebene Niedervoltbeleuchtungssystem 17 mit einer Steuerinformationsbeaufschlagung des Modulators 5.2 realisieren, wie dieses zu Figur 3 beschrieben ist.

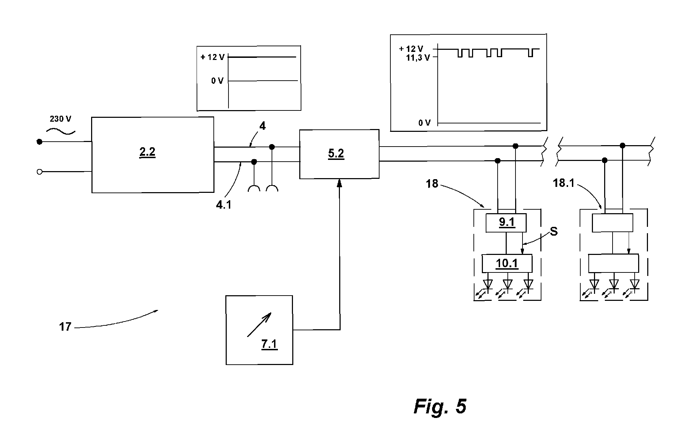

Figur 5 zeigt das Niedervoltbeleuchtungssystem 17 der Figur 4, bei dem die Modulation der Niederspannung gemäß einem anderen Algorithmus, als zu der Niedervoltbeleuchtungssystem 17 beschrieben, durchgeführt wird. Bei dem Betrieb des Niedervoltbeleuchtungssystems 17 gemäß der Darstellung der Figur 5 wird die von dem Schaltnetzteil 2.2 bereitgestellte Spannung derart moduliert, dass nur diejenigen Pulse, in der die Nenn-Niederspannung von 12 V nicht durch die Modulationsspannung abgesenkt ist, informationstragend sind. Dieses wird durch eine Pulsweitenmodulation erreicht. Je nach Länge dieses Pulses enthält dieser eine unterschiedliche Information. Auf dieses Weise ist es durchaus möglich, auch vier oder mehr unterschiedliche Bits übertragen zu können. Im Unterschied zu der in dem Ausführungsbeispiel der Figur 4 beschriebenen Modulation dienen die informationstragenden Pulse trennenden Pulse, die infolge der bei diesem Ausführungsbeispiel ebenfalls angewandten Modulationsspannung von 0,7 V bei einem Niveau von 11,3 V liegen, allein zum Trennen der informationstragenden 12 V Pulse. Daher sind diese Trennpulse nur sehr kurz und können vor allem so kurz ausgelegt sein, dass gerade noch eine Flankenerkennung zwischen den aufeinander folgenden 12 V Pulsen möglich ist. Wie auch in den vorangegangenen Figuren ist oberhalb des Ausgangsleiter des Modulators 5.2 ein diesbezügliches, nicht maßstabsgerechtes Diagramm zum Darstellen der vorbeschriebenen Modulation wiedergegeben.

Von besonderem Vorteil bei diesem Modulationsalgorithmus ist, dass die Lampeneinheiten 18, 18.1 quasi konstant mit der Nenn-Niedervoltspannung (hier: 12 V) versorgt sind. Die kurzzeitigen Unterbrechungen der informationstragenden 12 V Pulse ist für einen Anwender nicht etwa durch ein Flankern oder dergleichen erkennbar. Auf diese Weise kann während der gesamten Betriebsdauer der Lampeneinheiten 18, 18.1, ohne dass anwenderseitig Nachteile hinzunehmen wären, eine Informationsübermittlung an diese stattfinden.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung zu verwirklichen, ohne dass dieses im Einzelnen näher beschrieben werden müsste. Gleichwohl zählen auch diese Ausgestaltungen zum Offenbarungsgehalt dieser Ausführungen.

### Bezugszeichenliste

- 1, 1.1: Niedervoltbeleuchtungssystem
- 2, 2.1, 2.2: Schaltnetzteil
- 3: Ausgang
- 4, 4.1: Leiter
- 5, 5.1, 5.2: Modulator
- 6: Eingang
- 7, 7.1: Eingabeeinheit
- 8, 8.1, 8.2: Lampeneinheit
- 9, 9.1: Decoder
- 10, 10.1: Lampentreiber
- 11, 11.1, 11.2: LED
- 12: Gleichstromabgriff
- 13: Optokoppler
- 14: Decoder
- 15: Eingabeeinheit
- 16: schaltbarer Nebenschluss
- 17: Niedervoltbeleuchtungssystem
- 18, 18.1: Lampeneinheit

- G: Brücken-Gleichrichtung
- S: Steuerleitung

## Patentansprüche

1. Verfahren zum Ansteuern einer zumindest ein aktives Leuchtmittel (11, 11.1, 11.2) umfassenden Lampeneinheit (8, 8.1, 8.2; 18, 18.1) eines netzspannungsgespeisten Niedervoltbeleuchtungssystems (1, 1.1; 17), **dadurch gekennzeichnet, dass**
― zum Betreiben des Beleuchtungssystems (1, 1.1; 17) die das Beleuchtungssystem (1, 1.1; 17) speisende Netzspannung unter Verwendung eines Schaltnetzteils (2, 2.1, 2.2) in die Niederspannung des Niedervoltbeleuchtungssystems (1, 1.1; 17) umgewandelt wird,
― welche Niederspannung zum Übertragen von Steuerinformationen in digitaler Form an die Lampeneinheit (8, 8.1, 8.2; 18, 18.1) moduliert wird,
― welche modulierte Niederspannung in jeder auf diese Weise ansteuerbaren Lampeneinheit (8, 8.1, 8.2; 18, 18.1) decodiert wird, und
― das wenigstens eine aktive Leuchtmittel (11, 11.1, 11.2) der zumindest einen, auf diese Weise ansteuerbaren Lampeneinheit (8, 8.1, 8.2; 18, 18.1) des Beleuchtungssystems (1, 1.1, 17) entsprechend der empfangenen Steuerinformation bezüglich ihres Betriebes angesteuert wird.

2. Verfahren nach Anspruch 1, **dadurch gekennzeichnet, dass** die Niederspannung zum Übertragen von Steuerinformation an die wenigstens eine Lampeneinheit (8, 8.1) hinsichtlich ihrer Polarität moduliert wird.

3. Verfahren nach Anspruch 2, **dadurch gekennzeichnet, dass** sich die Binärzustände "1" und "0" hinsichtlich ihrer Pulsdauer voneinander unterscheiden.

4. Verfahren nach Anspruch 3, **dadurch gekennzeichnet, dass** die Pulsdauer des einen Zustandes, beispielsweise des Zustandes "1 " etwa der zwei- bis dreifachen Dauer des anderen Zustandes, beispielsweise "0" entspricht.

5. Verfahren nach einem der Ansprüche 2 bis 4, **dadurch gekennzeichnet, dass** die bezüglich ihrer Polarität modulierte Gleichspannung nach Auslesen der Steuerinformation gleichgerichtet wird.

6. Verfahren nach Anspruch 1, **dadurch gekennzeichnet, dass** die Niederspannung zum Übertragen von Steuerinformationen an die wenigstens eine Lampeneinheit (18, 18.1) mittels einer Modulationsspannung auf die Gleichspannung aufgeprägt wird.

7. Verfahren nach einem der Ansprüche 1 bis 6, **dadurch gekennzeichnet, dass** eine Ansteuerung des wenigstens einen Leuchtmittels (11, 11.1, 11.2) der Lampeneinheit (8, 8.1, 8.2; 18, 18.1) pulsweitenmoduliert oder gemäß dem in DE 10 2005 011 503 B3 beschriebenen Verfahren erfolgt.

8. Verfahren nach einem der Ansprüche 1 bis 7, **dadurch gekennzeichnet, dass** die auf die Niederspannung zu modulierende Steuerinformation als Modulation der das Schaltnetzteil (2.1) beaufschlagenden Netzspannung zugeführt und für die Zwecke des Modulierens der Niederspannung decodiert wird.

9. Steuergerät zum Ansteuern einer zumindest ein aktives Leuchtmittel (11, 11.1, 11.2) umfassenden Lampeneinheit (8, 8.1, 8.2; 18, 18.1) eines Niedervoltbeleuchtungssystems (1, 1.1), **dadurch gekennzeichnet, dass** das Steuergerät ein Schaltnetzteil (2, 2.1) zum Umwandeln von dieses beaufschlagender Netzspannung auf eine Niederspannung umfasst und dass dem Steuergerät ein Modulator (5, 5.1) zum Modulieren der Niederspannung zum Übertragen einer Steuerinformation in digitaler Form an die wenigstens eine Lampeneinheit (8, 8.1, 8.2; 18, 18.1) des Beleuchtungssystems sowie ein den Modulator (5, 5.1) beaufschlagendes Steuerinformationseingabegerät (7, 14) zugeordnet sind.

10. Steuergerät nach Anspruch 9, **dadurch gekennzeichnet, dass** das Steuerinformationseingabegerät eine Eingabeeinheit (7) zum Einstellen des gewünschten Leuchtmittelbetriebs ist.

11. Steuergerät nach Anspruch 9, **dadurch gekennzeichnet, dass** das Steuerinformationseingabegerät ein Decoder (14) ist, vorgesehen zum Decodieren von über die am Schaltnetzteil (2.1) anliegende Netzspannung durch Modulation derselben übermittelte Steuerinformation.

12. Steuergerät nach einem der Ansprüche 8 bis 10, **dadurch gekennzeichnet, dass** das Steuergerät (2, 2.1) über zumindest einen dem Modulator (5, 5.1) vorgeschalteten Niedervoltgleichstromabgriff (12) verfügt.

13. Steuergerät nach Anspruch 11, **dadurch gekennzeichnet, dass** an den Niedervoltgleichstromabgriff (12) ein drahtloses Kommunikationssystem, beispielsweise arbeitend auf einer Funkstrecke für die Zwecke einer Kommunikation in dem Beleuchtungssystem (1) und/oder zwischen daran angeschlossenen gebäudetechnischen Sensoren.

14. Lampeneinheit für ein Niedervoltbeleuchtungssystem (1, 1.1) mit zumindest einem aktiven Leuchtmittel (11, 11.1, 11.2), **dadurch gekennzeichnet, dass** die Lampeneinheit (8, 8.1, 8.2; 18, 18.1) einen Decoder (9) zum Decodieren von über das Niedervoltgleichstromnetz empfangener digitaler Steuerinformation und einen von dem Decoder (9) mit einem Steuersignal beaufschlagten Lampentreiber (10) zum Ansteuern des wenigstens einen Leuchtmittels (11, 11.1, 11.2) aufweist.

15. Lampeneinheit nach Anspruch 14, **dadurch gekennzeichnet, dass** diese über einen Gleichrichter (G) zum Gleichrichten der bezüglich ihrer Polarität zum Zwecke des Übertragens von Steuerinformation modulierten Niedervoltgleichspannung verfügt.

16. Lampeneinheit nach Anspruch 14 oder 14, **dadurch gekennzeichnet, dass** diese über drei aktive, sich bezüglich ihrer Lichtfarbe unterscheidende Leuchtmittel verfügt, insbesondere RGB-Leuchtmittel, etwa ausgeführt als LEDs (11, 11.1, 11.2), die unabhängig voneinander ansteuerbar sind.

17. Niedervoltbeleuchtungssystem, **dadurch gekennzeichnet, dass** dieses ein Steuergerät (2, 2.1) nach einem der Ansprüche 9 bis 13 und wenigstens eine Lampeneinheit (8, 8.1, 8.2; 18, 18.1) nach einem der Ansprüche 14 bis 16 umfasst.
